# EUROPÄISCHE PATENTSCHRIFT

(11) **EP 0 589 408 B1**
(45) Veröffentlichungstag und Bekanntmachung des Hinweises auf die Patenterteilung: **10.12.1997**
(21) Anmeldenummer: 93115168.2
(22) Anmeldetag: 21.09.1993
(51) Int. Cl.: F16D 65/12

(54) **Vorrichtung zum Zentrieren und Drehsichern einer Ring-Bremsscheibe bei Fahrzeugen**
Device for centering and preventing rotation of an annular brake disk on vehicles
Dispositif pour le centrage et la prévention de la rotation d'un frein annulaire sur des véhicules

(30) Priorität: 25.09.1992 DE 4232263
(43) Veröffentlichungstag der Anmeldung: 30.03.1994
(73) Patentinhaber: KNORR-BREMSE AG, 80809 München (DE)
(72) Erfinder: Kerscher, Albert, D-85386 Eching (DE); Schörwerth, Mathias, D-82538 Geretsried (DE); Wirth, Xaver, Dr., D-85737 Ismaning (DE)

(56) Entgegenhaltungen:
- EP-A- 0 127 932
- DE-A- 2 941 700
- DE-A- 3 413 843
- DE-A- 3 627 176
- DE-A- 3 718 770
- DE-A- 3 814 614
- GB-A- 2 023 771
- GB-A- 2 111 643
- GB-A- 2 136 921

## Beschreibung

Die Erfindung betrifft eine Vorrichtung zum Zentrieren und Drehsichern einer Wellenbremsscheibe gemäß Gattungsbegriff des Patentanspruches 1.

Bremsscheiben der in Rede stehenden Art bestehen im allgemeinen aus einem inneren Abschnitt, dem sogenannten Tragabschnitt, und aus dem Reibring; dieser wird vom Tragabschnitt gehalten. Der Tragabschnitt derartiger Bremsscheiben liegt im kühlen Zustand am Außenumfang des Nabenkörpers an, welcher seinerseits am Außenumfang der abzubremsenden Welle aufgeschrumpft oder fest mit dieser verbunden ist. Zu beiden Seiten des Tragabschnitts können Klemmabschnitte oder Klemmringe vorgesehen sein, welche teilweise vom Nabenkörper selbst, teilweise von gesonderten Klemmringabschnitten gebildet sein können. Schrauben durchsetzen entweder die Schlitze oder die zwischen den Schlitzen befindlichen Speichen als auch die Klemmabschnitte zu beiden Seiten des Tragabschnitts, so daß der die Bremsscheibe bildende Ringkörper zwischen den Klemmringen bzw. Klemmabschnitten verspannbar ist. Bei Erwärmung vollzieht sich am Ringkörper eine radiale, im allgemeinen ungerichtete Dehnung, welche zu einer unzentrischen Gesamtlage der Bremsscheibe führen kann, so daß die Zentrierung des Ringkörpers verloren geht. Diese Dezentrierung des Ringkörpers vom Nabensitz vollzieht sich hauptsächlich in Folge radialer Stöße auf die Welle, wodurch eine für den ruhigen Lauf der Welle achsenschädliche Unwucht entsteht.

Angesichts des Problems der Unwucht wurden bereits Befestigungsanordnungen für Bremsscheiben geschaffen (DE-34 13 843 A1), bei welchen die zur Befestigung der Bremsscheiben am Nabenkörper dienenden Schrauben als Gleitpaßschrauben bestehen, welche jeweils in der von ihnen durchsetzten Bohrung des Tragkörpers, d.h. der Radscheibe oder des Nabenkörpers, jeweils von einer Gleitbuchse geführt sind. Die Gleitbuchsen umgreifen die Gleitpaßschrauben mit korrespondierenden Anflächungen und sind radial nach außen gerichtet offen, derart, daß die Gleitpaßschrauben mittels dieser Anflächungen entlang der Innenflächen der Gleitbuchsen radial nach außen gerichtet bewegbar sind. Anordnungen dieser Art sind als baulich aufwendig anzusehen, da die Passung der Gleitbuchsen gegenüber den Gleitpaßschrauben in radialer Richtung genau gearbeitet werden muß; schließlich ist auch eine gewisse Schwächung der Gleitpaßschrauben im tragenden Bereich hinzunehmen. Auch Konstruktionen weiterer Art (DE-38 14 614; DE-29 41 700 und EP-127 932) sind hinsichtlich der Schraubverbindungen und ihrer radialen Führungen vergleichsweise aufwendig beschaffen.

Bei einer weiteren Anordnung (DE-37 18 770) sind am Nabenkörper ausgebildete Ringflansche vorgesehen, welche zu beiden Seiten den Ringkörper übergreifen, so daß die Abschnitte am Innen- und Außenumfang der Ringflansche bzw. des Ringkörpers im abgekühlten Zustand desselben unter radialem Spiel zueinander bestehen. Der Radialabstand verringert sich beim Aufheitzen der Bremsscheibe infolge warmer Dehnung, so daß bei maximal zulässiger Betriebstemperatur der Bremsscheibe dieser Abstand quasi aufgezehrt wird. Hierdurch erfährt der Reibring auch bei hohen Temperaturen eine gewisse Zentrierung. Nachteilig an dieser Ausführungsform der Zentrierung ist, daß die Kosten der Fertigung verhältnismäßig hoch sind und daß bei erwärmtem Ringkörper eine kraftproportionale Auslenkung des Ringmittelpunktes gegenüber dem Nabenmittelpunkt möglich ist. Bei dynamischer Belastung ist dieses verschleißfördernd und beeinträchtigt somit die Standzeit der gesamten Bremsscheibe. Von Bedeutung ist ferner, daß der Reibring der Bremsscheibe nur unzureichend gegen Verdrehung gesichert ist.

Davon ausgehend besteht die Aufgabe der Erfindung darin, eine Vorrichtung der gattungsgemäßen Art zu schaffen, welche bei einfacher baulicher Beschaffenheit gute Zentrierwirkung vermittelt und gleichzeitig eine wirksame Drehsicherung gewährleistet. Insbesondere sollen die Herstellungskosten derartiger Vorrichtungen zum Zentrieren und Drehsichern niedrig gehalten werden können.

Zur Lösung dieser Aufgabe dienen die Merkmale nach dem Kennzeichnungsteil des Patentanspruches 1.

Mit den zur Lösung der Aufgabe dienenden Mitteln ist mit baulich einfacher Anordnung ein Zentrieren und gleichzeitiges Drehsichern des Ringkörpers der Bremsscheibe auf dem Nabenkörper gewährleistet. Durch unmittelbare Zuordnung der Zentrier- und Drehsicherungselemente an den Befestigungsschrauben erübrigen sich kostenspielige Gleitbuchsenanordnungen, welche den Befestigungsschrauben einzeln zugeordnet werden müßten. Dem Reibring der Bremsscheibe wird während des Aufwärmvorgangs und während des Betriebs zu jeder Zeit eine sichere und genaue Führung geboten, da die Zentrier- und Drehsicherungselemente an ihren seitlichen Punkten ständig, zumindest an einem Punkt mit der Innenwand einer Ausnehmung am Innenumfang der Wellenbremsscheibe in Berührung stehen.

Die Erfindung wird nachfolgend anhand von Ausführungsbeispielen unter Bezugnahme auf die beigefügte Zeichnung erläutert.
Figur 1 ist eine teilweise geschnittene Teildraufsicht der erfindungsgemäßen Zentrier- und Drehsicherungsvorrichtung an einer Wellenbremsscheibe;
Figur 2 ist eine schematische Darstellung eines Zentrier- und Drehsicherungselementes in einer Ausnehmung;
Figur 3 ist eine Teilschnittansicht einer erfindungsgemäßen Ausführungsform eines Zentrier- und Drehsicherungselementes nach der Erfindung; und
Figur 4 ist eine Draufsicht eines Nabenkörpers mit Laschen zur Aufnahme der Zentrier- und Drehsicherungselemente.

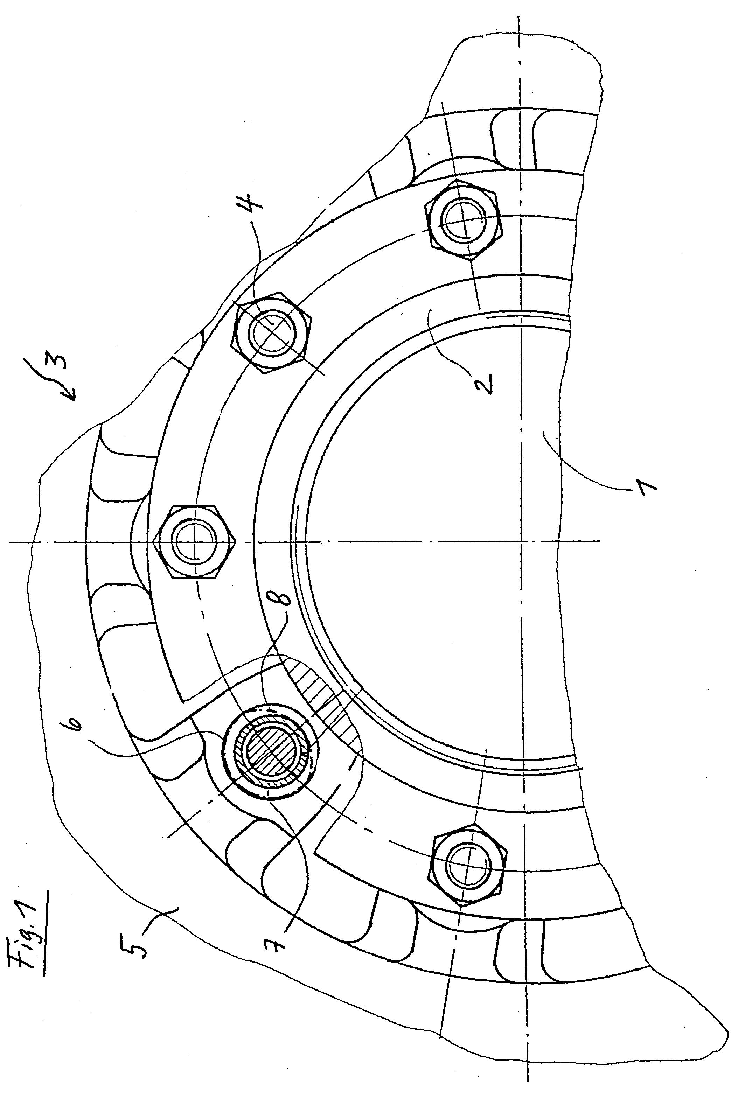

In Figur 1 der Zeichnung ist in Teildraufsicht eine erste Ausführungsform der erfindungsgemäßen Vorrichtung zum Zentrieren und Drehsichern einer Wellenbremsscheibe dargestellt. Auf die abzubremsende Welle 1 ist ein Nabenkörper 2 aufgeschrumpft, an welchem die Wellenbremsscheibe 3 mittels Befestigungsschrauben 4 befestigt ist. Die Bohrungen sowohl für die Befestigungsschrauben 4 als auch für die erfindungsgemäße Vorrichtung zum Zentrieren und Drehsichern befinden sich auf einem gemeinsamen Teilkreis. Die erfindungsgemäße Vorrichtung beinhaltet eine zylindrische Buchse 7 und ein sich daran anschließendes ovales Führungselement 8. Die zylindrische Buchse 7 ist am Außendurchmesser mit einem genauen Paßmaß hergestellt; der Außendurchmesser der Buchse wird von ihrem Bohrungsdurchmesser bestimmt. Der Bohrungsdurchmesser ist wiederum abhängig vom Durchmesser der verwendeten Schraubverbindung, welche die Nabe mit der Reibscheibe 5 verbindet.

Zur Aufnahme der zylindrischen Buchsen 7 am Nabenkörper 2 sind auf dem Teilkreis vorzugsweise mindestens drei Aufnahmebohrungen vorgesehen, in welche die zylindrische Buchse jeweils derart eingepreßt ist, daß das daran anschließende ovale Führungselement 8 mit der größeren Achshälfte um 90 Grad verdreht zur radialen Achse der Aufnahmebohrung steht.

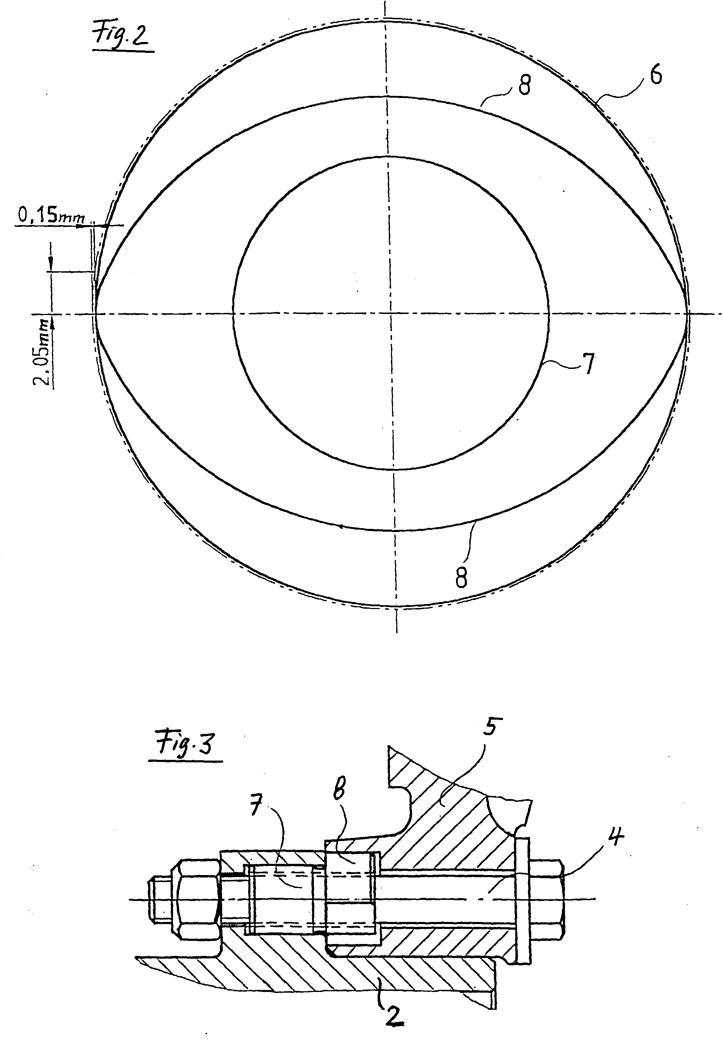

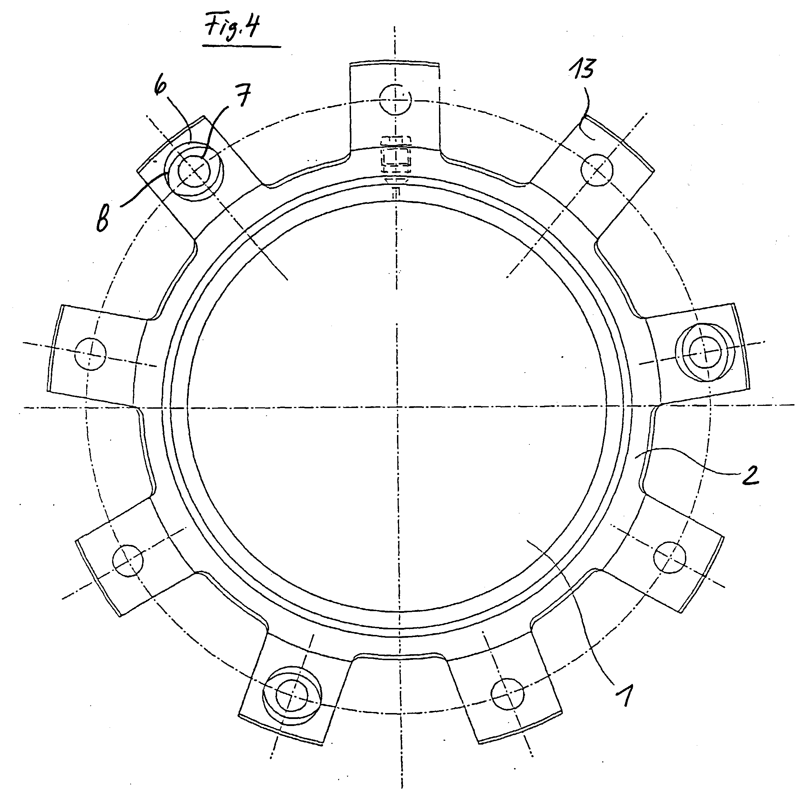

In Figur 2 ist das Prinzip der erfindungsgemäßen Ausführungsform der Vorrichtung zum Zentrieren und Drehsichern der Wellenbremsscheibe schematisch dargestellt. An die zylindrische Buchse 7 schließt sich das ovale Führungselement 8 an; wie aus Figur 3 ersichtlich ist, kann der obere Abschnitt des ovalen Führungselementes 8 nahezu kreisrund mit dem Durchmesser der Ausnehmung 6 übereinstimmen, während die unteren Hälfte des ovalen Führungselementes 8 eine größere Exzentrizität besitzt, derart, daß zwischen der Ausnehmung 6 und dem ovalen Führungselement 8 ausreichend Spiel zur radialen Ausdehnung des Reibrings 5 besteht. Bei einer Ausdehnung durch Erwärmung des Reibrings von nur 0,15 mm kann sich dieser 2,05 mm nach oben bewegen, wobei gleichzeitig die Berührungspunkte des ovalen Führungselementes 8, zumindest einer, an den Innenwänden der Ausnehmung 6 anliegen und somit die Wellenbremsscheibe zentrieren und gegen Verdrehung absichern. Zur Montage der erfindungsgemäßen Vorrichtung wird der Reibring zum Nabenkörper so ausgemittelt, daß die Aufnahmebohrungen zu den zylindrischen Buchsen fluchten. Sodann wird der Reibring über die zylindrischen Buchsen 7 bis auf Anschlag zur Nabenschulter geschoben. Anschließend wird die Verschraubung mit Befestigungsschrauben 4 vorgenommen. Das Anziehdrehmoment der Verschraubung ist so gewählt, daß das Bremsmoment reibschlüssig auf den Nabenkörper übertragbar ist. Das Verdrehen des Reibrings zum Nabenkörper wird jeweils durch das Einhaken des ovalen Führungselementes 8 in eine Lasche 13 (Figur 4) des Reibrings verhindert. Falls die Verbindung des Reibrings mit dem Nabenkörper mindestens drei Zentrier-Drehsicherungen aufweist, wird der Reibring bei Erwärmung und gleichzeitigem Abheben vom kalten Sitz auf der Welle zentriert, so daß der Reibring mittig zur Achse gehalten wird.

In Figur 4 ist ein Nabenkörper 2 dargestellt, welcher auf einer Welle 1 aufgeschrumpft ist. Der Nabenkörper ist mit Laschen 13 versehen, die die Bohrungen 16 für die Befestigungsschrauben enthalten. An drei symmetrisch auf einem Lochkreis liegenden Laschen 13 sind die erfindungsgemäßen Zentrier-Drehsicherungsvorrichtungen vorgesehen; die zylindrischen Ausnehmungen 6, welche die ovalen Führungselemente 8 aufnehmen, sind deutlich größer als die Bohrungen für die Befestigungsschrauben.

## Patentansprüche

1. Vorrichtung zum Zentrieren und Drehsichern einer Wellenbremsscheibe (3) eines Schienenfahrzeuges, mit einem auf einer Welle (1) befestigten Nabenkörper (2), an dem der Reibring (5) der Wellenbremsscheibe (3) mittels Schraubverbindungen mit Spiel verschraubt ist, wobei sich vom Nabenkörper (2) auf einem Teilkreis unter Winkelabstand zueinander mindestens zwei Zentrier- und Drehsicherungselemente erstrecken, welche in Ausnehmungen (6) am Innenumfang des Reibrings (5) der Wellenbremsscheibe (5) geführt sind, derart, daß sie gegenüber den Ausnehmungen radiales Spiel besitzen und auf ihrem Teilkreis wenigstens einen Punkt der Innenwand der Ausnehmungen berühren, **gekennzeichnet durch** folgende Merkmale:
a) die Zentrier- und Drehsicherungselemente bestehen aus ovalen Führungselementen (8), welche mit ihren längeren Achsabschnitten seitlich an der Innenwand der Ausnehmungen (6) anliegen;
b) die ovalen Führungselemente (8) sind von an diese sich anschließenden zylindrischen Buchsen (7) getragen;
c) die zylindrischen Buchsen (7) sind in Aufnahmebohrungen des Nabenkörpers (2) geführt; und
d) sowohl die zylindrischen Buchsen (7) als auch die Führungselemente (8) sind von den die Schraubverbindungen bildenden Befestigungsschrauben (4) durchsetzt.

## Claims

1. Device for centering and preventing rotation of a shaft brake disk (3) on a rail vehicle, including a hub body (2) secured on a shaft (1), to which hub body the friction ring (5) of said shaft brake disk (3) is screwed with backlash by means of screwed joints, with at least two centering elements which prevent rotation extending from said hub body (2) on a pitch circle at mutual angular spacings, which centering elements are guided in recesses (6) on the interior circumference of said friction ring (5) of said shaft brake disk (5) such that they present a radial backlash relative to said recesses and contact at least one point on the inner wall of said recesses on their pitch circle, **characterised by** the following features:
a) said centering elements which prevent rotation consist of oval guiding elements (8) having longer axial sections by which they bear laterally against the inner wall of said recesses (6);
b) said oval guiding elements (8) are supported by cylindrical bushes (7) joining them;
c) said cylindrical bushes (7) are guided in receiving bores in said hub body (2); and
d) the fastening screws (4) establishing said screwed joint pass through both said cylindrical bushes (7) and said guiding elements (8).

## Revendications

1. Dispositif de centrage et d'assujettissement en rotation d'un disque de frein d'arbre (3) d'un véhicule sur rails, comportant un corps formant moyeu (2) fixé sur un arbre (1) et auquel l'anneau de frottement (5) du disque de frein d'arbre (3) est fixé, avec un jeu, à l'aide de liaisons par vissage, au moins deux éléments de centrage et d'assujettissement en rotation, qui sont guidés dans des évidements (6) ménagés sur la périphérie intérieure de l'anneau de frottement (5) du disque de frein d'arbre (5), s'étendant en partant du corps formant moyeu (2) sur un cercle partiel, avec un espacement angulaire l'un par rapport à l'autre, de manière à présenter par rapport aux évidements un jeu radial et à venir en contact, sur leur cercle partiel, avec au moins un point de la paroi intérieure des évidements, caractérisé par les particularités suivantes :
a) les éléments de centrage et d'assujettissement en rotation sont constitués d'éléments de guidage ovales (8) qui appuient latéralement, par leurs longs tronçons axiaux, sur la paroi intérieure des évidements (6) ;
b) les éléments de guidage ovales (8) sont portés par des douilles cylindriques (7) se raccordant à ceux-ci ;
c) les douilles cylindriques (7) sont guidées dans des forures de réception du corps formant moyeu (2) ; et
d) tant les douilles cylindriques (7) que les éléments de guidage (8) sont traversés par les vis de fixation (4) constituant les liaisons par vissage.
